**Europäisches Patentamt**

**European Patent Office**

**Office européen des brevets**

(19)

(11) Veröffentlichungsnummer: **0 248 224 B1**

(12) # EUROPÄISCHE PATENTSCHRIFT

(45) Veröffentlichungstag der Patentschrift: **26.06.91**

(51) Int. Cl.⁵: **B01J 20/32, B01D 53/34**

(21) Anmeldenummer: **87106605.6**

(22) Anmeldetag: **07.05.87**

(54) **Masse zur Entfernung durch Chemiesorption von homogen gelösten Beimengungen, insbesondere Sauerstoff, aus Gasen oder Flüssigkeiten.**

(30) Priorität: **05.06.86 DE 3618942**

(43) Veröffentlichungstag der Anmeldung:
**09.12.87 Patentblatt 87/50**

(45) Bekanntmachung des Hinweises auf die
Patenterteilung:
**26.06.91 Patentblatt 91/26**

(84) Benannte Vertragsstaaten:
**AT BE CH FR GB IT LI NL SE**

(56) Entgegenhaltungen:
**DE-A- 1 667 129**
**DE-A- 2 553 568**
**DE-A- 3 511 919**
**GB-A- 1 263 132**
**GB-A- 2 155 452**

(73) Patentinhaber: **MESSER GRIESHEIM GMBH**
**Hanauer Landstrasse 330**
**W-6000 Frankfurt/Main(DE)**

(72) Erfinder: **Eschwey, Manfred, Dr.**
**Kreuzbergstrasse 7 H**
**W-4000 Düsseldorf 31(DE)**
Erfinder: **Schleser, Werner**
**Uhlandstrasse 25**
**W-4100 Duisburg 14(DE)**

Rank Xerox (UK) Business Services

**Beschreibung**

Masse zur Entfernung durch Chemisorption von homogen gelösten Beimengungen, insbesondere Sauerstoff, aus Gasen oder Flüssigkeiten

Die Erfindung betrifft eine Masse zur Entfernung durch Chemisorption von als Beimengung homogen gelösten Sauerstoff, Wasserdampf und deren Reaktionsprodukten mit reaktiven Hydriden sowie Stickoxid, Halogenwasserstoff, Schwefelwasserstoff, Schwefeldioxid, Ammoniak und/oder Kohlenmonoxid aus Gasen, gesättigten oder aromatischen Kohlenwasserstoffen oder Äthern, nach dem Oberbegriff des Anspruches 1.

Eine derartige Masse ist aus der DE-C- 1 667 129 bekannt. Sie läßt sich besonders wirksam zur Entfernung von Sauerstoff im Spurenbereich einsetzen, beispielsweise zur Herstellung von Reinstgasen und Prüfgasen. Zunehmende Bedeutung findet die Entfernung von Sauerstoff im Spurenbereich in der Halbleiterindustrie, in welcher reaktive Hydride als Prozeßgase eingesetzt werden. Hier ist die Reinheit der eingesetzten Prozeßchemikalien von entscheidender Bedeutung für die Ausbeute an funktionsfähigen Bauelementen.

So bewirkt die Anwesenheit von Sauerstoff im Spurenbereich bei einer Reihe von Prozeßschritten z.B. bei CVD (Chemical Vapor Deposition) - Prozessen durch die Erhöhung der Sauerstoffdefektdichte im Halbleitermaterial eine drastische Verschlechterung der elektrischen Eigenschaften des Halbleiterbauelementes. Zur Entfernung von Sauerstoffspuren aus inerten Spül- und Trägergasen, die in großen Mengen im Rahmen der Halbleiterfertigung eingesetzt werden, hat sich die aus der DE-C- 1 667 129 bekannte Masse ausgezeichnet bewährt. Für die Gruppe der reaktiven Prozeßgase für die Halbleiterfertigung, wie beispielsweise Silan, Disilan, Dichlorsilan, Diboran, Arsin, Phosphan sowie einige metallorganische Verbindungen wie Trimethylgallium, Trimethylaluminium, Trimethylindium und entsprechende Ethylverbindungen existieren bisher keine Möglichkeiten einer Nachreinigung vor Ort, d.h. in der Nähe des Verbrauchers. Die reaktionsfähigen Hydride reagieren nämlich in einer exothermen Reaktion mit freien Hydroxylgruppen des oxidischen Trägermaterials der Masse. In einer zweiten, parallel verlaufenden Reaktion werden die aktiven metallischen Zentren der Masse zu einer noch nicht definierten niedrigen Oxidationsstufe reduziert. Für diese Gruppe der Prozeßgase und metallorganischen Verbindungen wäre aber eine Möglichkeit der Nachreinigung vor Ort wünschenswert, da diese Komponenten in aller Regel zentral bereitgestellt und über lange Versorgungsleitungen zum eigentlichen Verbraucher gelangen. Hierbei ist eine Kontamination der eingesetzten reaktiven Prozeßgase oft nicht zu vermeiden.

Der Erfindung liegt daher die Aufgabe zugrunde, eine Masse zur Entfernung von homogen gelösten Beimengungen aus Gasen, gesättigten oder aromatischen Kohlenwasserstoffen oder Äthern durch Chemisorption zu schaffen, die es ermöglicht, insbesondere Sauerstoff, Wasserdampf und deren Reaktionsprodukte mit reaktiven Hydriden im Spurenbereich auch aus gasförmigen reaktiven Hydriden und deren Mischungen mit inerten Gasen zu entfernen.

Ausgehend von dem im Oberbegriff des Anspruches 1 berücksichtigten Stand der Technik ist diese Aufgabe erfindungsgemäß gelöst mit den im kennzeichnenen Teil des Anspruches 1 angegebenen Merkmalen.

Vorteilhafte Weiterbildungen der Erfindung sind in den Unteransprüchen angegeben.

Die Erfindung geht also aus von Massen, wie sie aus der DE-C- 16 67 129 bekannt sind.Eine solche Masse wird mit Hilfe eines reaktionsfähigen Hydrids wie beispielsweise Monosilan, Disilan, Halogensilane, Arsin, Phosphan, Diboran usw. in einen besonders aktiven Zustand überführt. Die aktiven Zentren des ursprünglichen Kontaktes, in aller Regel handelt es sich dabei um ein über Sauerstoffbrücken gebundenes, koordinativ ungesättigtes Metallion, werden durch diese Behandlung weiter reduziert. Die entstandenen besonders reaktiven Oxidationszustände der metallischen Zentren konnten bisher noch nicht näher definiert werden. Dieser zweite Reduktionsschritt bewirkt, daß sich eine solche Kontaktmasse zur effektiven Nachreinigung von reaktiven Hydriden und von metallorganischen Verbindungen eignet, wie sie im Rahmen der Halbleiterfertigung eingesetzt werden. Die Sauerstoffaufnahmekapazität erhöht sich gegenüber dem unbehandelten Kontakt durch den zweiten Reduktionsschritt drastisch.

Aus der DE-A-3 511 919 ist ein Gasreiniger bekannt, der aus einem porösen Material mit großer spezifischer Innenfläche und darauf abgeschiedenem wasserstoffhaltigen amorphen Silizium besteht. Das amorphe Silizium wird durch thermische Zersetzung oberhalb 300° C eines Hydrids von Silizium erhalten. Ein solcher Gasreiniger ist zur gleichzeitigen Entfernung von Sauerstoff und Wasser aus einem industriellen Rohgas geeignet, nicht jedoch zur Nachreinigung reaktiver Prozeßgase.

Diese erfindungsgemäß hydridreduzierten Absorbermassen lassen sich natürlich nicht nur zur Nachreinigung von reaktiven Gasen bzw. deren Gemische mit inerten Gasen einsetzen, sondern sie eignen sich auch zur Nachreinigung von beispielsweise Edelgasen, Wasserstoff und Stickstoff. Für ungesättigte Kohlenwasserstoffe wirken die Kontakte als effektive Polymerisationskatalysatoren. Ungesättigte Kohlenwasserstoffe und andere als Verunreinigung in Prozeßgasen auftretende Kohlenstoffverbindungen, die insbesondere bei der Halbleiterfertigung ebenso störend wirken wie Sauerstoff, können mit der erfindungsgemäßen Masse ebenfalls bis in den Spurenbereich gebunden werden.

Nachfolgend wird ein Beispiel zur Herstellung der erfindungsgemäßen Masse beschrieben.

Zunächst wird eine Masse gemäß der DE-C- 1 667 129 hergestellt. Hierzu wird ein oxidischer Träger, z.B. Aluminiumoxid oder Siliciumdioxid, mit einer wässrigen Chromsäurelösung getränkt, so daß der imprägnierte lufttrockene Träger die Metallkomponente in einer Konz. 1 - 10 Gew.% enthält. Es sind jedoch ebenso kleinere bzw. größere Mengen möglich. Die Masse wird anschließend in eine Säule abgefüllt und in einen Röhrenofen eingesetzt. Der Röhrenofen ermöglicht eine Beheizung über die gesamte Schütthöhe der Masse in der Säule. Die Säule besitzt eine Anschlußleitung zur Zufuhr der gewünschten Gase, so daß diese die Schüttung durchströmen können.

Die abgefüllte Masse wird zunächst getrocknet und mit molekularem Sauerstoff bei erhöhten Temperaturen aktiviert. Dazu leitet man Luft von 300 bis 600° C durch die Masse. Nach dieser Aktivierung liegen die Metalle als Oberflächenverbindungen auf dem Träger in hohen Oxidationsstufen vor. Es entsteht dabei $Cr^{6+}$.

Nach diesem Aktivierungsschritt wird die Masse bei 250° C mit Kohlenmonoxid behandelt. Hierdurch wird das oxidisch gebundene Chrom zu der sehr reaktiven Oxidationsstufe +2 reduziert. Es liegt nun eine Masse gemäß DE-C- 1 667 129 vor.

Nach der vollständigen Abtreibung des Kohlenmonoxids durch Spülen mit Stickstoff erfolgt nun die erfindungsgemäße Reduktion der Masse mit einem reaktionsfähigen Hydrid, im Ausführungsbeispiel Monosilan. Die Reaktion des Kontaktes mit dem Silan muß dabei so gesteuert werden, z.B. durch Verdünnen mit Stickstoff, daß die Temperatur 200° C nicht übersteigt. Das Fortschreiten der Reaktionsfront läßt sich durch Temperaturmessungen entlang der Absorberschüttung verfolgen. Im Ausführungsbeispiel läßt sich der Verlauf der Reduktion mit Silan auch visuell feststellen: So beobachtet man bei den chromhaltigen Absorbermassen,die vor der Beaufschlagung mit Silan blau gefärbt sind, daß nach der Reduktion der Kontakt grau-schwarz gefärbt ist. Im Verlauf dieser exothermen Reaktion wird Wasserstoff gebildet, der nach Beendigung der Monosilanbehandlung durch Spülen mit einem Inertgas vollständig von der danach gebrauchsfertigen hydridreduzierten Absorbermasse abgetrieben wird.

Sämtliche Schritte, die zur Präparation der erfindungsgemäßen Absorbermassen notwendig sind, können unter Normaldruck durchgeführt werden. Ohne Nachteile sind jedoch auch höhere Druckstufen zulässig. Das beschriebene Gasnachreinigungsverfahren arbeitet erfahrungsgemäß über einen sehr weiten Temperatur- und Druckbereich von -200° C bis +600° C bzw. von 1 bis 300 bar. Innerhalb dieses weiten Bereiches kann im Einzelfall die jeweils zweckmäßige Temperatur bzw. Druckstufe gewählt werden. In vielen Fällen ist es besonders vorteilhaft bei Zimmertemperatur zu arbeiten, da dann keine Wärmezufuhr oder Kühlung erforderlich ist.

Die erfindungsgemäße Wirksamkeit der Absorbermassen zur effektiven Entfernung von Sauerstoff und seinen Verbindungen aus Gasströmen, die reaktionsfähige Hydride enthalten, konnte durch Einsatz hochempfindlicher gaschromatographischer und massenspektroskopischer Methoden nachgewiesen werden. So liegt der Sauerstoffgehalt und der Wasserdampfgehalt in entsprechend behandelten Gasströmen unter der jeweiligen analytischen Nachweisgrenze von 0,01 vpm für $O_2$ bzw. unter 0,1 vpm für Wasserdampf.

Zum Nachweis der erfindungsgemäßen Wirksamkeit der hydridreduzierten Absorbermassen wurde einem Heliumstrom, der 5 vpm Wasserdampf und 2.0 vpm Sauerstoff enthielt, eine definierte Menge Monosilan hinzugemischt, so daß eine homogene Mischung im Bereich von 1 - 5 Vol.% entstand. Im Anschluß daran wurde das Gasgemisch durch eine Absorberschüttung geleitet, die aus einer entsprechend Anspruch 2 präparierten, silanreduzierten Kontaktmasse mit 4.5 Gewichstprozentteilen Chrom auf Siliciumdioxid bestand. Am Ausgang des Kontaktes lag in allen Konzentrationsbereichen der Sauerstoff- und Wasserstoffdampfgehalt des Silan/Helium-Gasgemisches unter der jeweiligen analytischen Nachweisgrenze von 0,01 vpm für $O_2$ und 0,1 vpm für Wasserdampf. Darüber hinaus konnte massenspektrometisch bzw. gaschromatographisch nachgewiesen werden, daß unter diesen Bedingungen auch keine Reaktionsprodukte des Monosilans mit Sauerstoff bzw. Wasserdampf wie z.B. Siliciumdioxid, Disiloxan und Wasserstoff gebildet werden.

Zum Nachweis der Erhöhung der Sauerstoffaufnahmekapazität diente folgender Vergleichsversuch.

Eine nach DE-C- 1667129 hergestellte Masse, die auf Siliciumdioxid 3% (Gew.) Chrom enthielt, wurde mit Monosilan in einem zweiten Reduktionsschritt bei 70 - 200° C aktiviert. Zur Bestimmung der Sauerstoffaufnahmekapazität wurde der Kontakt mit Helium, das 1 Vol.-% Sauerstoff enthielt, reduziert. Der Druck des Sauerstoffs wurde mit Hilfe eines kommerziellen Sauerstoffspurenmeßgerätes detektiert. Als Vergleich diente die unbehandelte Masse:

| Aufgenommene Menge | $SiH_4$ (g) | $O_2$ (g) |
|---|---|---|
| Kontaktmasse | pro kg | pro kg |
| 3 Gew.-%Cr | | |
| Siliciumdioxid | - | 15,7 |
| gleiche Masse Silan-reduziert | 118 | 120,9 |

Die Sauerstoffaufnahmekapazität erhöhte sich durch die erfindungsgemäße Behandlung gegenüber der unbehandelten Masse somit um 769 %.

## Ansprüche

1. Masse zur Entfernung durch Chemisorption von als Beimengung homogen gelöstem Sauerstoff, Wasserdampf und deren Reaktionsprodukten mit reaktiven Hydriden, sowie Stickoxid, Halogenwasserstoff, Schwefelwasserstoff, Schwefeldioxid, Ammoniak und/oder Kohlenmonoxid aus Gasen, gesättigten oder aromatischen Kohlenwasserstoffen oder Äthern, bestehend aus einem wärmebeständigen oxidischen Träger mit großer Oberfläche, die mit einer aktiven eisen-, nickel-, rhenium-, titan-, mangan-, vanadium-, molybdän- und/oder chromhaltigen Komponente dotiert ist, welche bei 300 bis 600 °C mit molekularem Sauerstoff aktiviert und danach mit einem reduzierenden Gas bei einer Temperatur zwischen 200 °C bis unterhalb der jeweiligen Aktivierungstemperatur behandelt ist, dadurch gekennzeichnet, daß die Masse vor ihrer Verwendung als Chemisorptionsmittel zusätzlich mit einem reaktionsfähigen gasförmigen Hydrid reduziert wird.

2. Masse nach Anspruch 1,
dadurch gekennzeichnet,
daß die Reduktion mit Hydrid bei Temperaturen bis maximal 200 °C erfolgt.

3. Verfahren zur Herstellung der Masse nach Anspruch 2,
dadurch gekennzeichnet,
daß die Reduktionstemperatur durch Verdünnen des Hydrids mit Stickstoff gesteuert wird.

4. Verwendung der Masse nach Anspruch 1 oder 2,
zur Entfernung von Sauerstoff im Spurenbereich aus gasförmigen reaktiven Hydriden und deren Mischungen mit inerten Gasen.

## Claims

1. Material for removing, by chemisorption, oxygen, water vapour and their reaction products with reactive hydrides, and also nitrogen, hydrogen halides, hydrogen sulphide, sulphur dioxide, ammonia and/or carbon monoxide, homogeneously dissolved as impurity from gases, saturated or aromatic hydrocarbons or ethers, which material is composed of a heat-resistant oxidic substrate having a large surface which is doped with an active component which contains iron, nickel, rhenium, titanium, manganese, vanadium, molybdenum and/or chromium and which is activated with molecular oxygen at 300 to 600 °C and is then treated with a reducing gas at a temperature between 200 °C and a temperature below the respective activation temperature, characterised in that the material is additionally reduced with a reactive gaseous hydride before it is used as a chemisorption agent.

2. Material according to Claim 1, characterised in that the reduction with hydride is carried out at temperatures of up to a maximum of 200°C.

3. Process for producing the material according to Claim 2, characterised in that the reduction temperature is controlled by diluting the hydride with nitrogen.

4. Use of the material according to Claim 1 or 2 to remove oxygen in the trace range from gaseous reactive hydrides and their mixtures with inert gases.

**Revendications**

1. Masse pour l'élimination par chimiesorption de l'oxygène, de la vapeur d'eau et de leurs produits de réaction avec des hydrures réactifs, dissous, homogènes, en tant mélange, ainsi que de l'oxyde d'azote, l'acide chlorhydrique, l'hydrogène sulfuré, l'anhydride sulfureux, l'ammoniac, et/ou l'oxyde de carbone, à partir de gaz d'hydrocarbures saturés ou aromatiques ou d'éthers, consistant en un support en oxyde, stable a la chaleur ayant une grande surface qui est dotée avec un composant actif contenant du fer, du nickel, du rhénium, du titane, du manganèse, du vanadium, du molybdène et/ou du chrome, qui est activé à une température allant de 300 à 600°c avec de l'oxygène moléculaire et ensuite est traitée avec un gaz réducteur à une température comprise entre 200°C et en dessous de la température d'activation correspondante,
caractérisée en ce que la masse est réduite avant son utilisation comme agent de chimiesortion, en addition avec un hydrure gazeux réactif.

2. Masse selon la revendication 1, caractérisée en ce que de la réduction s'effectue avec un hydrure à une température allant jusqu'à 200°C au maximum.

3. Procédé d'obtention de la masse selon la revendication 2, caractérisé en ce que la température de réduction est contrôlée par dilution de l'hydrure par de l'azote.

4. Utilisation de la masse selon la revendication 1 ou 2 pour élimination de l'oxygène à l'état de traces, d'hydrures réactifs gazeux et de leurs mélanges avec des gaz inertes.